(19) Europäisches Patentamt
European Patent Office
Office européen des brevets

(11) **EP 3 951 761 B1**

(12) **EUROPEAN PATENT SPECIFICATION**

(45) Date of publication and mention
of the grant of the patent:
**01.05.2024  Bulletin 2024/18**

(21) Application number: **21164385.3**

(22) Date of filing: **23.03.2021**

(51) International Patent Classification (IPC):
***G09G 3/3233*** *(2016.01)*

(52) Cooperative Patent Classification (CPC):
**G09G 3/3233;** G09G 2320/0233; G09G 2320/0285;
G09G 2320/029; G09G 2320/0295;
G09G 2320/043; G09G 2320/045; G09G 2360/16

(54) **SYSTEM AND METHOD FOR TRANSISTOR PARAMETER ESTIMATION**

SYSTEM UND VERFAHREN ZUR SCHÄTZUNG VON TRANSISTORPARAMETER

SYSTÈME ET PROCÉDÉ D'ESTIMATION DE PARAMÈTRE DE TRANSISTOR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2020  US 202063062898 P
14.10.2020  US 202017070842**

(43) Date of publication of application:
**09.02.2022  Bulletin 2022/06**

(73) Proprietor: **Samsung Display Co., Ltd.
Yongin-si, Gyeonggi-Do 17113 (KR)**

(72) Inventor: **MALHOTRA, Gaurav
Cupertino, California 95014 (US)**

(74) Representative: **Marks & Clerk LLP
15 Fetter Lane
London EC4A 1BW (GB)**

(56) References cited:
**EP-A1- 3 779 951      US-A1- 2017 039 953
US-A1- 2018 182 303**

**Description**

**FIELD**

One or more aspects of embodiments according to the present disclosure relate to a system and method for transistor parameter estimation.

**BACKGROUND**

In a system including a transistor having uncertain parameters, or in a system including a plurality of transistors having different parameters, it may be advantageous to drive the transistor or the transistors with a circuit that compensates for the uncertainty in, or for the variation in, the parameters. To this end, a system and method for transistor parameter estimation may be used. EP3779951 A1, US2017039953 A1 and US2018182303 A1 each disclose methods and/or systems in which such uncertainties or variations in the parameters of driving transistors in display devices may be compensated.

**SUMMARY**

According to an embodiment of the present invention, there is provided a method as set out in appended claim 1.

According to an embodiment of the present invention, there is provided a system as set out in appended claim 15.

**BRIEF DESCRIPTION OF THE DRAWINGS**

The features and advantages of the present disclosure will be appreciated and understood with reference to the specification, claims, and appended drawings wherein:

FIG. 1 is a block diagram of a circuit with a transistor, according to an embodiment of the present disclosure;
FIG. 2 is a block diagram of a circuit with a transistor, according to an embodiment of the present disclosure; and
FIG. 3 is a flow chart of a method for transistor parameter estimation and compensation, according to an embodiment of the present disclosure.

**DETAILED DESCRIPTION**

The detailed description set forth below in connection with the appended drawings is intended as a description of embodiments of a system and method for transistor parameter estimation provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different arrangements. As denoted elsewhere herein, like element numbers are intended to indicate like elements or features.

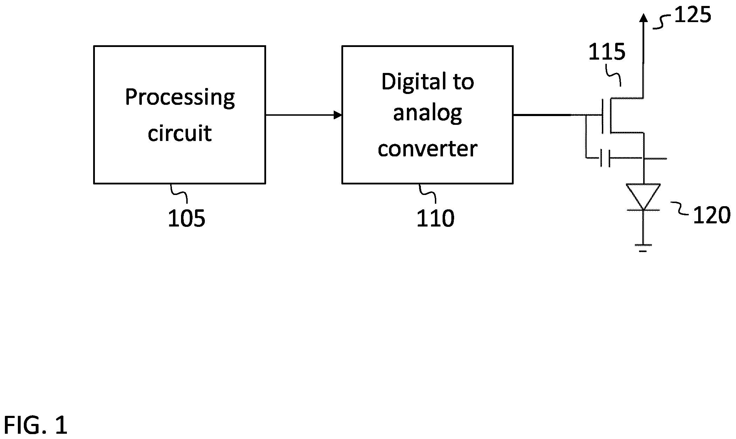

Referring to FIG. 1, in a video display, such as a computer monitor, a plurality of light emitting pixels may each include a drive transistor 115, the drive transistor 115 being configured to drive a current through a light-emitting device, such as a light emitting diode 120, responsive to a brightness control signal, or "color value". The drive transistor 115 may be a field-effect transistor (FET) connected to a power source 125. The pixels may each include a capacitor connected between a gate electrode of the drive transistor 115 and a drain electrode of the drive transistor 115. A display may include a large number of such drive transistors, and the drive transistors may not be perfectly identical. In such a system (and in other systems in which a transistor is to be controlled) it may be advantageous to compensate for the variations in transistor parameters so that a given brightness control signal (e.g., a digital control signal received from a video card of a computer), specifying a brightness to be achieved, results in substantially the same brightness, regardless of which pixel it is applied to.

In such a system, parameters may be estimated for each transistor, and a control voltage may be applied to each transistor based on the brightness control signal and on the parameters of the transistor. The control voltage may be adjusted (e.g., by a processing circuit 105 (discussed in further detail below), and a digital to analog converter 110) to compensate for differences between the parameters of the transistor being driven and a reference transistor. For example, a multiplicative compensation coefficient may be applied to (i.e., multiplied by) the brightness control signal, and an additive compensation coefficient may then be applied to the product (of the brightness control signal and the multiplicative compensation coefficient), such that the transistor drives substantially the same current as a reference transistor (which may be a hypothetical, "ideal" transistor) would drive for the same brightness control signal, if the compensation coefficients (i.e., the multiplicative compensation coefficient and the additive compensation coefficient) were set to nominal values.

The parameters of the transistor may be estimated by measuring the current that the transistor drives (i.e., determining a measured transistor current) at each of a plurality of transistor control voltages. As used herein, the "current that the transistor drives" is the current flowing through the channel of the transistor (i.e., between the source and the drain). As used herein, the "control voltage" or "transistor control voltage" is the gate-source voltage.

From the measured transistor currents and the transistor control voltages, parameters of the transistor may be estimated, and, based on these parameters, initial values of the compensation coefficients (i.e., the multiplicative compensation coefficient and the additive compensation coefficient) may be set. These parameters may include, for a FET, the threshold voltage $V_{th}$, the mobility M, the alpha $\alpha$, and the bias current $I_{bias}$. The transistor model parameterized by these parameters may be:

$$I_{DS} = M * (V_{gs} - V_{th})^\alpha + I_{bias}$$

The terms "alpha" and "$\alpha$" are synonymous, and used interchangeably, herein. The term $I_{DS}$ is the current flowing through the transistor between the source and the drain of the transistor. $V_{gs}$ is the transistor control voltage, or gate-source voltage.

In some embodiments, the parameters may be estimated as follows, from a plurality of measured transistor currents, each determined at a respective one of a plurality of transistor control voltages. Four of the measured transistor currents may be referred to as $I_1$, $I_2$, $I_3$, and $I_4$, and the corresponding control voltages may be $Vgs_1$, $Vgs_2$, $Vgs_3$, and $Vgs_4$. These measured transistor currents and transistor control voltages result, when substituted into the transistor model, in the following four equations:

$$I_1 = ( Vgs_1 - V_{th})^\alpha * M + I_{bias}$$

$$I_2 = ( Vgs_2 - V_{th})^\alpha * M + I_{bias}$$

$$I_3 = ( Vgs_3 - V_{th})^\alpha * M + I_{bias}$$

$$I_4 = ( Vgs_4 - V_{th})^\alpha * M + I_{bias}$$

These equations may be combined (e.g., subtracted) pairwise, to arrive at, for example, the following three equations, from which the bias term $I_{bias}$ has been eliminated:

$$I_2 - I_1 = M * [(Vgs_2 - V_{th})^\alpha - (Vgs_1 - V_{th})^\alpha ]$$

$$I_4 - I_2 = M * [(Vgs_4 - V_{th})^\alpha - (Vgs_2 - V_{th})^\alpha ]$$

$$I_4 - I_3 = M * [(Vgs_4 - V_{th})^\alpha - (Vgs_3 - V_{th})^\alpha ]$$

The above three equations are three of the six (four choose two, i.e., $_4C_2$) such equations that may be formed as pairwise differences of the four measured transistor currents. In some embodiments, more than four transistor currents are measured (or fewer may be measured, as discussed below), and a different set of pairwise differences may be formed. The three equations above may be combined (e.g., ratios may be taken) pairwise, to arrive at, for example, the following two equations, from which the mobility M has also been eliminated:

3

$$\frac{I_4 - I_2}{I_2 - I_1} = \frac{(Vgs_4 - V_{th})^\alpha - (Vgs_2 - V_{th})^\alpha}{(Vgs_2 - V_{th})^\alpha - (Vgs_1 - V_{th})^\alpha}$$

$$\frac{I_4 - I_2}{I_3 - I_1} = \frac{(Vgs_4 - V_{th})^\alpha - (Vgs_2 - V_{th})^\alpha}{(Vgs_3 - V_{th})^\alpha - (Vgs_1 - V_{th})^\alpha}$$

As such, each of the two equations depends only, of the parameters of the transistor, on the alpha and the threshold voltage. The above equations are two independent equations in the two unknowns, and may be solved for the unknowns, $V_{th}$ and $\alpha$. This may be accomplished, for example, by performing a gradient descent optimization, or by performing an exhaustive search across a grid of values of $V_{th}$ and $\alpha$. The grid may extend over a respective range of plausible values for each of $V_{th}$ and $\alpha$ (e.g., a range of 0V to 0.7V for $V_{th}$, and a range of 1.5 to 2.5 for $\alpha$), to find a set of $\{V_{th}, \alpha\}$ values that minimize a cost function. Such an approach may find an approximate numerical solution for the alpha and the threshold voltage, the approximate numerical solution minimizing the cost function, which may be a measure of error in the extent to which the two equations are satisfied. The cost function may be the mean squared error, MSE, for example, defined as follows:

$$MSE = \sqrt{\sum_{i=1}^{N} \frac{(LHS(i) - RHS(i))2}{N}} \ .$$

In the above formula, LHS(i) and RHS(i) take the usual mathematical meaning of left-hand side and right-hand side, respectively. The values for $V_{th}$ and $\alpha$ may satisfy the above equations, e.g., for these values of $V_{th}$ and $\alpha$, it may be the case that

$$\frac{(Vgs_4 - V_{th})^\alpha - (Vgs_2 - V_{th})^\alpha}{(Vgs_2 - V_{th})^\alpha - (Vgs_1 - V_{th})^\alpha}$$

has the same value as

$$\frac{I_4 - I_2}{I_2 - I_1},$$

or, in some embodiments, the values may differ somewhat, e.g.,

$$\frac{(Vgs_4 - V_{th})^\alpha - (Vgs_2 - V_{th})^\alpha}{(Vgs_2 - V_{th})^\alpha - (Vgs_1 - V_{th})^\alpha}$$

may have a value within 50% of

$$\frac{I_4 - I_2}{I_2 - I_1}.$$

Once values for $V_{th}$ and $\alpha$ have been found, a value for the mobility M may be found from the following equations (which are three equations in the one unknown M).

$$I_2 - I_1 = M * [( Vgs_2 - V_{th})^\alpha - (Vgs_1 - V_{th})^\alpha ]$$

$$I_4 - I_2 = M * [( Vgs_4 - V_{th})^\alpha - (Vgs_2 - V_{th})^\alpha ]$$

$$I_4 - I_3 = M * [( Vgs_4 - V_{th})^\alpha - (Vgs_3 - V_{th})^\alpha ]$$

These equations form an overdetermined system of linear equations and may be solved, e.g., by writing them in the following form:

$$M * \begin{bmatrix} k1 \\ k2 \\ k3 \end{bmatrix} = \begin{bmatrix} I_2 - I_1 \\ I_4 - I_2 \\ I_4 - I_3 \end{bmatrix}$$

where $k1 = [(Vgs_2 - V_{th})^\alpha - (Vgs_1 - V_{th})^\alpha ]$, and $k2$ and $k3$ are defined analogously, and solving

$$M = K^\Psi I$$

where $K^\Psi$ is the pseudoinverse of the vector $\begin{bmatrix} k1 \\ k2 \\ k3 \end{bmatrix}$ and $I$ is the vector $\begin{bmatrix} I_2 - I_1 \\ I_4 - I_2 \\ I_4 - I_3 \end{bmatrix}$.

To find the bias, the following overdetermined system may be solved for $I_{bias}$:

$$I_{bias} * \begin{bmatrix} 1 \\ 1 \\ 1 \\ 1 \end{bmatrix} = \begin{bmatrix} I_1 \\ I_2 \\ I_3 \\ I_4 \end{bmatrix} - \begin{bmatrix} M*(Vgs_1 - V_{th})^\alpha \\ M*(Vgs_2 - V_{th})^\alpha \\ M*(Vgs_3 - V_{th})^\alpha \\ M*(Vgs_4 - V_{th})^\alpha \end{bmatrix}$$

If a least squares fit is used to solve this system, the solution for $I_{bias}$ will be the mean of the four bias currents (which may be obtained by solving the transistor model for the bias current four times, using, each time, (i) a different one of the four measured transistor currents and (ii) the corresponding transistor control voltage).

In some circumstances, the leakage current $I_{bias}$ may be negligible (e.g., there may be no leakage). The zero-bias transistor model may be written:

$$I_{DS} = M * (V_{gs} - V_{th})^\alpha$$

In this model, $\alpha$, Vth, and M are the unknown parameters to be estimated. The mobility may be eliminated by taking a ratio of (i) the zero-bias transistor model at a second measured transistor current and at the corresponding transistor control voltage and (ii) the zero-bias transistor model at a first measured transistor current and at the corresponding transistor control voltage:

$$\frac{I_2}{I_1} = \frac{M(Vgs_2-V_{th})^\alpha}{M(Vgs_1-V_{th})^\alpha}.$$

From this equation, it follows that

$$\frac{I_2}{I_1} = \frac{(Vgs_2-V_{th})^\alpha}{(Vgs_1-V_{th})^\alpha}$$

which is an equation in the unknowns $V_{th}$ and $\alpha$. Another equation in the unknowns $V_{th}$ and $\alpha$ may be obtained for additional measured transistor currents and corresponding transistor control voltages:

$$\frac{I_4}{I_3} = \frac{(Vgs_2-V_{th})^\alpha}{(Vgs_3-V_{th})^\alpha}$$

Each of the two equations above depends only, of the parameters of the transistor, on the alpha and the threshold voltage. Taking the logarithm of both sides of each of two equations above the results in the following equations:

$$\log[\frac{I_2}{I_1}] = \alpha\log[\frac{(Vgs_2-V_{th})}{(Vgs_1-V_{th})}]$$

$$\log[\frac{I_4}{I_3}] = \alpha\log[\frac{(Vgs_4-V_{th})}{(Vgs_3-V_{th})}]$$

The parameter $\alpha$ may then be eliminated by taking the ratio of the above equations:

$$\frac{\log[\frac{I_4}{I_3}]}{\log[\frac{I_2}{I_1}]} = \frac{\log[\frac{(Vgs_4-V_{th})}{(Vgs_3-V_{th})}]}{\log[\frac{(Vgs_2-V_{th})}{(Vgs_1-V_{th})}]}$$

The above equation depends only, of the parameters of the transistor, on the threshold voltage, and may be solved iteratively for $V_{th}$ (e.g., by performing an exhaustive search across a grid of values of $V_{th}$, the grid extending over a range of plausible values of $V_{th}$ (e.g., a range of 0 to 0.7V)). In some embodiments, the transistor control voltages are

$$\frac{I_4}{I_3} = \frac{I_2}{I_1}$$

chosen such that (e.g., the currents may be (or may be within 30% of) the following: $I_1$=1 nA, $I_2$ = 2 nA, $I_3$ = 2.5 nA, and $I_4$= 5 nA),

in which case $V_{th}$ may be solved for directly, to arrive at the following:

$$V_{th} = \frac{Vgs_1 Vgs_4 - Vgs_3 Vgs_2}{Vgs_1 + Vgs_4 - Vgs_3 - Vgs_2}$$

In some embodiments, a similar (but not necessarily identical) value for $V_{th}$ may be found, e.g., one for which

$$\frac{\log[\frac{(Vgs_4 - V_{th})}{(Vgs_3 - V_{th})}]}{\log[\frac{(Vgs_2 - V_{th})}{(Vgs_1 - V_{th})}]}$$

has a value within 50% of

$$\frac{\log[\frac{I_4}{I_3}]}{\log[\frac{I_2}{I_1}]}.$$

The value of $V_{th}$ may then be used to find $\alpha$ and M as follows:

$$\alpha = \frac{\text{Log}(I_2/I_1)}{\text{Log}[(Vgs_2 - V_{th})/(Vgs_1 - V_{th})]}$$

$$M = \frac{I_2}{(V_2 - Vth)^\alpha}$$

These values of $V_{th}$ and $\alpha$ may have the characteristic that

$$\frac{(Vgs_2 - V_{th})^\alpha}{(Vgs_1 - V_{th})^\alpha}$$

has a value within 50% of

$$\frac{I_2}{I_1}.$$

Since $\alpha$ and M can be calculated using multiple values of the measured transistor currents and the corresponding transistor control voltages, a least squares fit may be used to calculate alpha:

$$\alpha = \text{Log}V^\psi \text{ Log } I \text{ or } \alpha = (\text{Log}(V))^\psi \text{ Log } I$$

Then $\alpha$ and M may be obtained as follows:

$$\alpha = \log\left[\frac{I_2}{I_1}\right] / \log[\frac{(Vgs_2 - V_{th})}{(Vgs_1 - V_{th})}]$$

$$M = I_2 / (Vgs_2 - V_{th})^\alpha$$

The above approach uses four measured transistor currents; because, in the zero-bias case, only three parameters ($V_{th}$, $\alpha$ and M) are solved for, three measured transistor currents may be sufficient to solve for these parameters, and, in some embodiments, only three measured transistor currents are used.

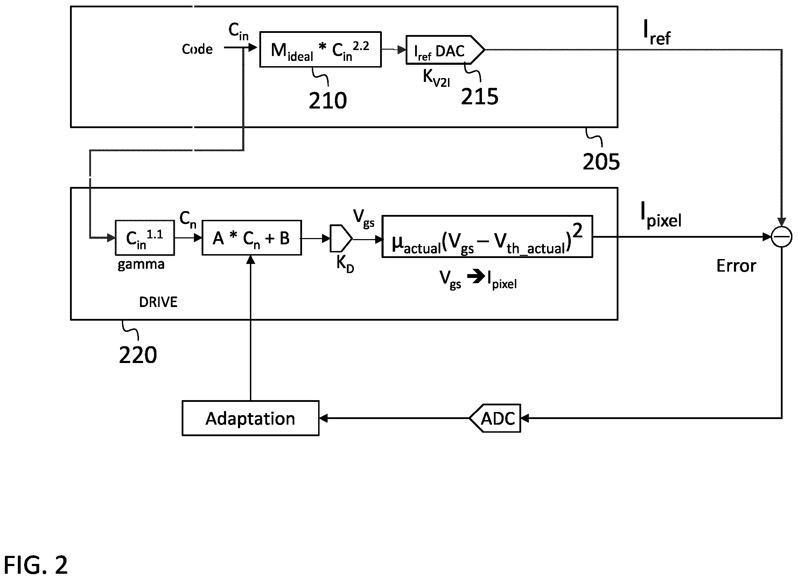

Once the parameters of the transistor have been estimated, compensation coefficients (i.e., the multiplicative compensation coefficient and the additive compensation coefficient) may be calculated as follows. FIG. 2 shows a circuit for controlling a transistor, in some embodiments. A reference current source 205 includes (i) a processing circuit 210 for calculating $M_{ideal} * C_{in}^2$, where $M_{ideal}$ is a reference mobility and $C_{in}$ is a control word (which may represent a requested pixel brightness) and (ii) a current digital to analog converter (or "current DAC") 215, and produces a reference current, according to the function $I_{ref} = M_{ideal} K_{V2I} C_{in}^{2.}$. The reference mobility $M_{ideal}$ may be selected to be within the range of plausible values for M, e.g., it may be selected to be a value the mobility would be expected to have, absent manufacturing variations and changes in transistor characteristics with age. A drive circuit 220 includes the processing circuit 105 (FIG. 1) (which calculates an adjusted transistor control voltage based on the control word $C_{in}$ and on the compensation coefficients), the digital to analog converter 110, and the transistor 115. The processing circuit 105, which is employed for applying the compensation (i.e., the multiplicative compensation coefficient and the additive compensation coefficient), may be a processing circuit, suitably configured (e.g., with firmware or software) and may be referred to as a "compensation circuit". The processing circuit 105 of the drive circuit 220 (DRIVE shown in Fig. 2) may share components with (e.g., it may be the same processing circuit as) the processing circuit 210 of the reference current source 205. The reference mobility $M_{ideal}$, the gain $K_{V2I}$ of $I_{ref}$ DAC 215, and the gain $K_D$ of the digital to analog converter of the drive circuit 220 are known.

The unknown parameters include $V_{th}$ (which may also be referred to as $V_{th\_actual}$), the actual threshold voltage of the transistor, and M (which may also be referred to as $M_{actual}$), the actual mobility of the transistor. The symbol "M" may be used interchangeably with the symbol "$\mu$". For example, $M_{actual}$ may also be $\mu_{actual}$. These unknown parameters may be estimated, e.g., as described above, from measured transistor currents and from the corresponding transistor control voltages.

Initial values of the compensation coefficients (i.e., the multiplicative compensation coefficient A and the additive compensation coefficient B) may then be calculated as follows.

If $I_{ref} = I_{pixel}$, then

$$M_{ideal}[\ K_{V2I}\ C_{in}^{2.2}] = M_{actual}[\ K_D\ (AC_{in}^{1.1} + B\ ) - V_{th\_actual}]^2$$

$$M_{ideal}\ K_{V2I}\ C_{in}^{2.2} = M_{actual}[\ K_D\ AC_{in}^{1.1} + K_D B - V_{th\_actual}]^2$$

If B is chosen such that $K_D B = V_{th\_actual}$, (by setting $B = V_{th\_actual} / K_D$) then the equation above becomes

$$M_{ideal}\ K_{V2I}\ C_{in}^{2.2} = M_{actual}[\ K_D\ AC_{in}^{1.1}\ ]^2$$

which may be solved for A to yield

$$A = \sqrt{(M_{ideal} / M_{actual})} * (1/K_D)$$

The combination of the compensation circuit 105, the digital to analog converter 110, and the transistor 115 may, when the above values of A and B are used, have characteristics that are substantially those of an uncompensated transistor having a threshold voltage of zero, and having the reference mobility, driven through a digital to analog converter 110 with the same gain. As such, the above values of A and B correspond to an effective threshold voltage of zero and to an effective mobility equal to a reference mobility. The above-derived values of A and B may be used as initial values, and adaptive adjustments may then be made, based on residual errors (each residual error being a measured difference between (i) a desired, or "reference" current to be driven through a light-emitting device, and (ii) a transistor drive current) measured when the compensation coefficients (i.e., the multiplicative compensation coefficient and the additive compensation coefficient) are applied. The adaptation may be performed, for example, as described in U.S. Patent Application Ser. No. 16/657,680, filed October 18, 2019, entitled "ESTIMATION OF PIXEL COMPENSATION COEFFICIENTS BY ADAPTATION".

In the above equations, $C_{in}^{1.1}$ and $C_{in}^{2.2}$ may be the gamma corrected control words. This is represented in Fig. 2 using the term "gamma" at the block representing $C_{in}^{1.1}$, for example.

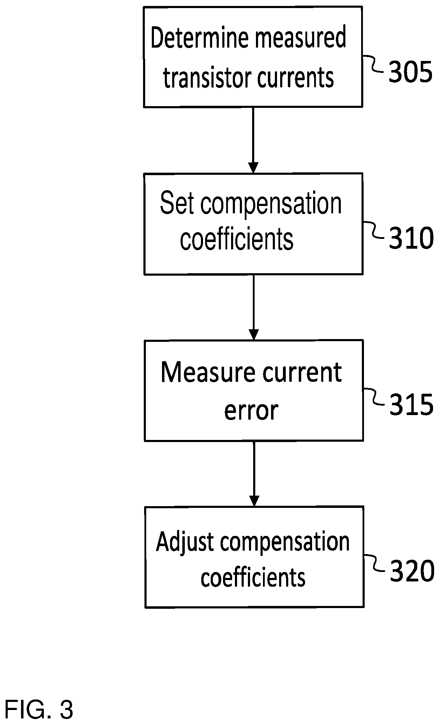

FIG. 3 shows a flow chart, in some embodiments. The method includes, at 305, determining a plurality of measured transistor currents (e.g., each at a respective one of a plurality of transistor control voltages); at 310, setting initial values for the multiplicative compensation coefficient and the additive compensation coefficient (e.g., based on the current measurements and the control voltages); and performing adaptive adjustments of the multiplicative compensation coefficient and the additive compensation coefficient, e.g., by, at 315, measuring a residual error; and, at 320, adjusting the multiplicative compensation coefficient and the additive compensation coefficient.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, the term "rectangle" includes a square as a special case, i.e., a square is an example of a rectangle, and the term "rectangular" encompasses the adjective "square". As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The terms "processing circuit" or "means for processing" are used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Although embodiments of a system and method for transistor parameter estimation have been specifically described and illustrated herein, many modifications and variations will be apparent to those skilled in the art. Accordingly, it is to be understood that a system and method for transistor parameter estimation constructed according to principles of this disclosure may be embodied other than as specifically described herein. The invention is also defined in the following claims.

**Claims**

1. A method for setting initial values for a multiplicative compensation coefficient and an additive compensation coefficient for a transistor, the method comprising:

   determining a plurality of measured transistor currents, each at a respective one of at least three transistor control voltages ($V_{gs}$);
   setting initial values of the multiplicative compensation coefficient and an additive compensation coefficient based on the measured transistor currents and the transistor control voltages; and
   adjusting a voltage applied to a gate of the transistor based on the multiplicative compensation coefficient and the additive compensation coefficient, the voltage corresponding to a color value,
   wherein setting of the initial values of the multiplicative compensation coefficient and the additive compensation coefficient comprises estimating a plurality of parameters of the transistor, wherein the plurality of parameters includes an alpha ($\alpha$), a threshold voltage ($v_{th}$), and a mobility (M);
   and **characterised in that** the method further comprises the steps of: H
   estimating the plurality of parameters uses a transistor model based on the plurality of parameters, the measured current ($I_{DS}$), and control voltage ($V_{gs}$), providing an equation for each measured current and control voltage, and combining the equations by taking a ratio to provide two equations from which the mobility (M) has been eliminated, said two equations including only the alpha and threshold value ($V_{th}$) as unknown parameters of the transistor.

2. The method of claim 1, wherein the transistor model parametrizing the transistor parameters is:

$$I_{DS} = M * (V_{gs} - V_{th})^{\alpha} + I_{bias}$$

   where $I_{bias}$ is optionally assumed to be zero.

3. The method of claim 2, wherein there are four measured currents ($I_1$ to $I_4$) and the equations are combined by subtracting pairwise the equation for each measured current, and taking ratio's to provide the two equations, which are of the form:

$$\frac{I_4 - I_2}{I_2 - I_1} = \frac{(Vgs_4 - V_{th})^{\alpha} - (Vgs_2 - V_{th})^{\alpha}}{(Vgs_2 - V_{th})^{\alpha} - (Vgs_1 - V_{th})^{\alpha}}$$

$$\frac{I_4 - I_2}{I_3 - I_1} = \frac{(Vgs_4 - V_{th})^{\alpha} - (Vgs_2 - V_{th})^{\alpha}}{(Vgs_3 - V_{th})^{\alpha} - (Vgs_1 - V_{th})^{\alpha}}$$

4. The method of any of one of claims 1 to 3, wherein the solving comprises finding an approximate numerical solution for the alpha and the threshold voltage, the approximate numerical solution minimizing a measure of error in the extent to which the two equations are satisfied.

5. The method of claim 4, wherein finding an approximate solution by minimizing the cost function is satisfied where:

$$\frac{(Vgs_4 - V_{th})^\alpha - (Vgs_2 - V_{th})^\alpha}{(Vgs_2 - V_{th})^\alpha - (Vgs_1 - V_{th})^\alpha}$$

has a value within 50% of

$$\frac{I_4 - I_2}{I_2 - I_1}$$

6. The method of claim 2, wherein a zero-bias model is used, wherein $I_{bias}$ is deemed to be zero, and wherein the two equations are of the form:

$$\frac{I_2}{I_1} = \frac{M(Vgs_2 - V_{th})^\alpha}{M(Vgs_1 - V_{th})^\alpha}.$$

7. The method of claim 5, wherein finding an approximate solution by minimizing the cost function is satisfied when

$$\frac{(Vgs_2 - V_{th})^\alpha}{(Vgs_1 - V_{th})^\alpha}$$

has a value within 50% of

$$\frac{I_2}{I_1}$$

8. The method of any one preceding claim, further comprising solving for the mobility with a least squares fit, based on the estimated alpha and threshold voltage.

9. The method of claim 8, wherein the method further comprises solving for the bias current with a least squares fit, based on the alpha, the threshold voltage, and the mobility.

10. The method of any of claim 6, wherein the threshold voltage is estimated by eliminating the parameter alpha by taking the logarithm of both sides of each of the two equations and taking a ratio to provide an equation, having only the threshold voltage as an unknown parameter of the transistor, of the form:

$$\frac{\log[\frac{I_4}{I_3}]}{\log[\frac{I_2}{I_1}]} = \frac{\log[\frac{(Vgs_4 - V_{th})}{(Vgs_3 - V_{th})}]}{\log[\frac{(Vgs_2 - V_{th})}{(Vgs_1 - V_{th})}]}$$

11. The method of claim 10, wherein solving the equation having the threshold voltage as the only unknown parameter of the transistor is performed iteratively and is satisfied where,

$$\frac{\log[\frac{(Vgs_4 - V_{th})}{(Vgs_3 - V_{th})}]}{\log[\frac{(Vgs_2 - V_{th})}{(Vgs_1 - V_{th})}]}$$

has a value within 50% of

$$\frac{\log[\frac{I_4}{I_3}]}{\log[\frac{I_2}{I_1}]}$$

**12.** The method of any one preceding claim, further comprising setting the additive compensation coefficient to a value within 20% of a value corresponding to an effective threshold voltage of zero.

**13.** The method of claim 12, wherein the method further comprises setting the multiplicative compensation coefficient to a value within 20% of a value corresponding to an effective mobility equal to a reference mobility.

**14.** The method of any preceding claim, wherein
the method further comprises:
setting the voltage applied to the gate based on:

the multiplicative compensation coefficient,
the additive compensation coefficient, and
the color value,
measuring a difference between:

a current driven by the transistor, and
a reference current; and

adjusting the multiplicative compensation coefficient and the additive compensation coefficient based on the difference.

**15.** A system comprising:

means for processing;
a power source;
a light emitting device; and
a transistor, connected between the power source and the light emitting device,
the processing circuit being configured to perform the method of any preceding claim.

**Patentansprüche**

**1.** Verfahren zum Einstellen von Anfangswerten für einen multiplikativen Kompensationskoeffizienten und einen additiven Kompensationskoeffizienten für einen Transistor, wobei das Verfahren Folgendes umfasst:

Bestimmen einer Vielzahl von gemessenen Transistorströmen, jeder bei einer jeweiligen von mindestens drei Transistor-Steuerspannungen ($V_{gs}$);
Einstellen von Anfangswerten des multiplikativen Kompensationskoeffizienten und eines additiven Kompensationskoeffizienten auf der Grundlage der gemessenen Transistorströme und der Transistorsteuerspannungen; und
Nachregeln einer Spannung, die an ein Gate des Transistors angelegt wird, auf der Grundlage des multiplikativen Kompensationskoeffizienten und des additiven Kompensationskoeffizienten, wobei die Spannung einem Farbwert entspricht,
wobei das Einstellen der Anfangswerte des multiplikativen Kompensationskoeffizienten und des additiven Kompensationskoeffizienten das Schätzen einer Vielzahl von Parametern des Transistors umfasst, wobei die Vielzahl von Parametern einen Alpha-Parameter ($\alpha$), eine Schwellenspannung ($V_{th}$) und eine Mobilität (M) umfasst;
und **dadurch gekennzeichnet, dass** das Verfahren ferner die folgenden Schritte umfasst:

Schätzen der Vielzahl von Parametern verwendet ein Transistormodell auf der Grundlage der Vielzahl von Parametern, des gemessenen Stroms ($I_{DS}$) und der Steuerspannung ($V_{gs}$),
Bereitstellen einer Gleichung für jeden gemessenen Strom und jede Steuerspannung, und
Kombinieren der Gleichungen durch Bilden eines Verhältnisses, um zwei Gleichungen bereitzustellen, aus denen die Mobilität (M) eliminiert worden ist,
wobei die beiden Gleichungen nur den Alpha-Parameter und die Schwellenspannung ($V_{th}$) als unbekannte Parameter des Transistors einschließen.

2. Verfahren nach Anspruch 1, wobei das Transistormodell, das die Transistorparameter parametrisiert, Folgendes ist:

$$I_{DS} = M * (V_{gs} - V_{th})^{\alpha} + I_{bias}$$

wobei optional angenommen wird, dass $I_{bias}$ gleich null ist.

3. Verfahren nach Anspruch 2, wobei es vier gemessene Ströme ($I_1$ bis $I_4$) gibt und die Gleichungen kombiniert werden, indem die Gleichung für jeden gemessenen Strom paarweise subtrahiert wird und Verhältnis gebildet werden, um die beiden Gleichungen bereitzustellen, welche die folgende Form haben:

$$\frac{I_4 - I_2}{I_2 - I_1} = \frac{(Vgs_4 - V_{th})^{\alpha} - (Vgs_2 - V_{th})^{\alpha}}{(Vgs_2 - V_{th})^{\alpha} - (Vgs_1 - V_{th})^{\alpha}}$$

$$\frac{I_4 - I_2}{I_3 - I_1} = \frac{(Vgs_4 - V_{th})^{\alpha} - (Vgs_2 - V_{th})^{\alpha}}{(Vgs_3 - V_{th})^{\alpha} - (Vgs_1 - V_{th})^{\alpha}}$$

4. Verfahren nach einem der Ansprüche 1 bis 3, wobei das Lösen das Finden einer numerischen Näherungslösung für den Alpha-Parameter und die Schwellenspannung umfasst, wobei die numerische Näherungslösung in dem Maße, in dem die beiden Gleichungen erfüllt werden, ein Fehlermaß minimiert.

5. Verfahren nach Anspruch 4, wobei das Finden einer Näherungslösung durch Minimieren der Kostenfunktion erfüllt ist, wenn:

$$\frac{(Vgs_4 - V_{th})^{\alpha} - (Vgs_2 - V_{th})^{\alpha}}{(Vgs_2 - V_{th})^{\alpha} - (Vgs_1 - V_{th})^{\alpha}}$$

einen Wert innerhalb von 50 % von

$$\frac{I_4 - I_2}{I_2 - I_1}$$

hat.

6. Verfahren nach Anspruch 2, wobei ein Null-Bias-Modell verwendet wird, bei dem $I_{bias}$ als null angesehen wird und die beiden Gleichungen die Form haben:

$$\frac{I_2}{I_1} = \frac{M(Vgs_2 - V_{th})^{\alpha}}{M(Vgs_1 - V_{th})^{\alpha}}.$$

7. Verfahren nach Anspruch 5, wobei das Finden einer Näherungslösung durch Minimieren der Kostenfunktion erfüllt ist, wenn

$$\frac{(Vgs_2 - V_{th})^{\alpha}}{(Vgs_1 - V_{th})^{\alpha}}$$

einen Wert innerhalb von 50 % von

$$\frac{I_2}{I_1}$$

hat.

**8.** Verfahren nach einem der vorhergehenden Ansprüche, ferner das Auflösen nach der Mobilität mit einer Anpassung der kleinsten Quadrate auf der Grundlage der geschätzten Parameter Alpha und Schwellenspannung umfassend.

**9.** Verfahren nach Anspruch 8, wobei das Verfahren ferner das Auflösen nach dem Vorspannungsstrom mit einer Anpassung der kleinsten Quadrate auf der Grundlage der Parameter Alpha, Schwellenspannung und Mobilität umfasst.

**10.** Verfahren nach einem der Ansprüche 6, wobei die Schwellenspannung durch Eliminieren des Alpha-Parameters geschätzt wird, indem der Logarithmus auf beiden Seiten jeder der beiden Gleichungen genommen und ein Verhältnis gebildet wird, um eine Gleichung bereitzustellen, die nur die Schwellenspannung als unbekannten Parameter des Transistors hat, in der Form:

$$\frac{\log[\frac{I_4}{I_3}]}{\log[\frac{I_2}{I_1}]} = \frac{\log[\frac{(Vgs_4-V_{th})}{(Vgs_3-V_{th})}]}{\log[\frac{(Vgs_2-V_{th})}{(Vgs_1-V_{th})}]} .$$

**11.** Verfahren nach Anspruch 10, wobei das Lösen der Gleichung mit der Schwellenspannung als einzigem unbekannten Parameter des Transistors iterativ durchgeführt wird und erfüllt ist, wenn

$$\frac{\log[\frac{(Vgs_4-V_{th})}{(Vgs_3-V_{th})}]}{\log[\frac{(Vgs_2-V_{th})}{(Vgs_1-V_{th})}]}$$

einen Wert innerhalb von 50 % von

$$\frac{\log[\frac{I_4}{I_3}]}{\log[\frac{I_2}{I_1}]}$$

hat.

**12.** Verfahren nach einem der vorhergehenden Ansprüche, ferner das Einstellen des additiven Kompensationskoeffizienten auf einen Wert innerhalb von 20 % eines Wertes, der einer effektiven Schwellenspannung von null entspricht, umfassend.

**13.** Verfahren nach Anspruch 12, wobei das Verfahren ferner das Einstellen des multiplikativen Kompensationskoeffizienten auf einen Wert innerhalb von 20 % eines Wertes, der einer effektiven Mobilität entspricht, die gleich einer Referenzmobilität ist, umfasst.

**14.** Verfahren nach einem der vorhergehenden Ansprüche, wobei das Verfahren ferner Folgendes umfasst:
Einstellen der an das Gate angelegten Spannung auf der Grundlage von:

dem multiplikativen Kompensationskoeffizienten,
dem additiven Kompensationskoeffizienten, und
dem Farbwert,
Messen einer Differenz zwischen:

einem Strom, der durch den Transistor getrieben wird, und
einem Referenzstrom; und
Nachregeln des multiplikativen Kompensationskoeffizienten und des additiven Kompensationskoeffizienten auf der Grundlage der Differenz.

**15.** System, umfassend:

Mittel zur Verarbeitung;
eine Stromquelle;
eine lichtemittierende Vorrichtung; und
einen Transistor, der zwischen die Stromquelle und die lichtemittierende Vorrichtung geschaltet ist,
wobei die Verarbeitungsschaltung dafür konfiguriert ist, das Verfahren nach einem der vorhergehenden Ansprüche durchzuführen.

## Revendications

**1.** Procédé de réglage de valeurs initiales pour un coefficient de compensation multiplicatif et un coefficient de compensation additif pour un transistor, le procédé comprenant :

la détermination d'une pluralité de courants de transistor mesurés, chacun à une tension respective d'au moins trois tensions de commande ($V_{gs}$) ;
le réglage de valeurs initiales du coefficient de compensation multiplicatif et d'un coefficient de compensation additif sur la base des courants de transistor mesurés et des tensions de commande du transistor ; et
l'ajustement d'une tension appliquée à une grille du transistor sur la base du coefficient de compensation multiplicatif et du coefficient de compensation additif, la tension correspondant à une valeur de couleur,
dans lequel le réglage des valeurs initiales du coefficient de compensation multiplicatif et du coefficient de compensation additif comprend l'estimation d'une pluralité de paramètres du transistor, dans lequel la pluralité de paramètres comprend un alpha ($\alpha$), une tension de seuil ($V_{th}$), et une mobilité (M) ;
et **caractérisé en ce que** le procédé comprend en outre les étapes suivantes :

l'estimation de la pluralité de paramètres utilise un modèle de transistor sur la base de la pluralité de paramètres, du courant mesuré ($I_{DS}$), et de la tension de commande ($V_{gs}$),
le fait de fournir une équation pour chaque courant et tension de commande mesurés, et
la combinaison des équations en établissant un rapport pour fournir deux équations à partir desquelles la mobilité (M) a été éliminée,
lesdites deux équations incluant uniquement l'alpha et la valeur de seuil ($V_{th}$) en tant que paramètres inconnus du transistor.

**2.** Procédé selon la revendication 1, dans lequel le modèle de transistor paramétrant les paramètres du transistor est :

$$I_{DS} = M * (V_{gs} - V_{th})^{\alpha} + I_{bias}$$

où $I_{bias}$ est optionnellement supposé être zéro.

**3.** Procédé selon la revendication 2, dans lequel il existe quatre courants mesurés ($I_1$ à $I_4$) et les équations sont combinées en soustrayant par paire l'équation pour chaque courant mesuré, et en établissant des rapports pour fournir les deux équations, qui sont sous la forme suivante :

$$\frac{I_4 - I_2}{I_2 - I_1} = \frac{(Vgs_4 - V_{th})^{\alpha} - (Vgs_2 - V_{th})^{\alpha}}{(Vgs_2 - V_{th})^{\alpha} - (Vgs_1 - V_{th})^{\alpha}}$$

$$\frac{I_4 - I_2}{I_3 - I_1} = \frac{(Vgs_4 - V_{th})^{\alpha} - (Vgs_2 - V_{th})^{\alpha}}{(Vgs_3 - V_{th})^{\alpha} - (Vgs_1 - V_{th})^{\alpha}}$$

**4.** Procédé selon l'une quelconque des revendications 1 à 3, dans lequel la résolution comprend une solution numérique approximative pour l'alpha et la valeur de seuil, la solution numérique approximative minimisant une mesure d'erreur selon la mesure dans laquelle les deux équations sont satisfaites.

**5.** Procédé selon la revendication 4, dans lequel la découverte d'une solution approximative en minimisant la fonction de coût est satisfaite lorsque :

$$\frac{(Vgs_4 - V_{th})^\alpha - (Vgs_2 - V_{th})^\alpha}{(Vgs_2 - V_{th})^\alpha - (Vgs_1 - V_{th})^\alpha}$$

présente une valeur de l'ordre de 50 % de

$$\frac{I_4 - I_2}{I_2 - I_1}$$

**6.** Procédé selon la revendication 2, dans lequel un modèle à polarisation nulle est utilisé, dans lequel $I_{bias}$ est considéré comme étant égal à zéro, et dans lequel les deux équations sont sous la forme suivante :

$$\frac{I_2}{I_1} = \frac{M(Vgs_2 - V_{th})^\alpha}{M(Vgs_1 - V_{th})^\alpha}.$$

**7.** Procédé selon la revendication 5, dans lequel la découverte d'une solution approximative en minimisant la fonction de coût est satisfaite lorsque

$$\frac{(Vgs_2 - V_{th})^\alpha}{(Vgs_1 - V_{th})^\alpha}$$

présente une valeur de l'ordre de 50 % de

$$\frac{I_2}{I_1}.$$

**8.** Procédé selon l'une quelconque des revendications précédentes, comprenant en outre la résolution de la mobilité avec un ajustement des moindres carrés sur la base de l'alpha et de la tension de seuil estimés.

**9.** Procédé selon la revendication 8, dans lequel le procédé comprend en outre la résolution du courant de polarisation avec un ajustement par moindres carrés, sur la base de l'alpha, de la tension de seuil et de la mobilité.

**10.** Procédé selon la revendication 6, dans lequel la tension de seuil est estimée en éliminant le paramètre alpha en prenant le logarithme des deux côtés de chacune des deux équations et en établissant un rapport pour fournir une équation, présentant seule la tension de seuil comme un paramètre inconnu du transistor, sous la forme :

$$\frac{\log[\frac{I_4}{I_3}]}{\log[\frac{I_2}{I_1}]} = \frac{\log[\frac{(Vgs_4 - V_{th})}{(Vgs_3 - V_{th})}]}{\log[\frac{(Vgs_2 - V_{th})}{(Vgs_1 - V_{th})}]}.$$

**11.** Procédé selon la revendication 10, dans lequel la résolution de l'équation présentant la tension de seuil comme seul paramètre inconnu du transistor est réalisée de manière itérative et est satisfaite lorsque

$$\frac{\log[\frac{(Vgs_4-V_{th})}{(Vgs_3-V_{th})}]}{\log[\frac{(Vgs_2-V_{th})}{(Vgs_1-V_{th})}]}$$

présente une valeur de l'ordre de 50 % de

$$\frac{\log[\frac{I_4}{I_3}]}{\log[\frac{I_2}{I_1}]}$$

.

**12.** Procédé selon l'une quelconque des revendications précédentes, comprenant en outre le réglage du coefficient de compensation additif à une valeur de l'ordre de 20 % d'une valeur correspondant à une tension de seuil effective de zéro.

**13.** Procédé selon la revendication 12, dans lequel le procédé comprend en outre le réglage du coefficient de compensation multiplicatif à une valeur de l'ordre de 20 % d'une valeur correspondant à une mobilité effective égale à une mobilité de référence.

**14.** Procédé selon l'une quelconque des revendications précédentes, dans lequel le procédé comprend en outre :
le réglage de la tension appliquée à la grille sur la base :

du coefficient de compensation multiplicatif,
du coefficient de compensation additif, et
de la valeur de couleur,
la mesure d'une différence entre :

un courant entraîné par le transistor, et
un courant de référence ; et
l'ajustement du coefficient de compensation multiplicatif et du coefficient de compensation additif sur la base de la différence.

**15.** Système comprenant :

des moyens de traitement ;
une source d'alimentation ;
un dispositif électroluminescent ; et
un transistor, connecté entre la source d'alimentation et le dispositif électroluminescent,
le circuit de traitement étant configuré pour réaliser le procédé selon l'une quelconque des revendications précédentes.

EP 3 951 761 B1

Processing circuit

105

Digital to analog converter

110

115

125

120

FIG. 1

FIG. 2

```
┌─────────────────────┐
│  Determine measured │ ⌐305
│  transistor currents│
└─────────────────────┘
          │
          ▼
┌─────────────────────┐
│   Set compensation  │ ⌐310
│     coefficients    │
└─────────────────────┘
          │
          ▼
┌─────────────────────┐
│   Measure current   │ ⌐315
│        error        │
└─────────────────────┘
          │
          ▼
┌─────────────────────┐
│ Adjust compensation │ ⌐320
│     coefficients    │
└─────────────────────┘
```

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3779951 A1
- US 2017039953 A1
- US 2018182303 A1
- US 65768019